# EUROPÄISCHE PATENTANMELDUNG

(11) **EP 2 985 764 A1**
(43) Veröffentlichungstag der Anmeldung: **17.02.2016**
(21) Anmeldenummer: 14181150.5
(22) Anmeldetag: 15.08.2014
(51) Int. Cl.: H01B 3/40, H02K 3/30, H02K 3/40

(54) **Tränkharz, Leiteranordnung, elektrische Spule und elektrische Maschine**

(71) Anmelder: Siemens Aktiengesellschaft, 80333 München (DE)
(72) Erfinder: Huber, Jürgen, 91058 Erlangen (DE); Klaussner, Bernhard, 90408 Nürnberg (DE); Schirm, Dieter, 96149 Breitengüßbach (DE)

(57) **Zusammenfassung**

Tränkharz, insbesondere ein katalytisch härtbares Tränkharz für die Leiter einer elektrischen Maschine, umfassend mindestens ein Reaktionsharz vermischt mit mindestens einem reaktiven Verdünner und einem Härtungskatalysator insbesondere für eine kationische, anionische oder koordinative Polymerisation des Tränkharzes, wobei zur Verbesserung der Eigenschaften des Tränkharz bei seinem Einsatz der reaktive Verdünner ein cyclisches, organisches Carbonat enthält. Das Tränkharz ist Teil einer Hauptisolation (12) der Leiteranordnung (2), die wiederum in einer elektrischen Spule oder allgemein in einer elektrischen Maschine eingebaut ist.

## Beschreibung

Die Erfindung betrifft ein Tränkharz, insbesondere ein katalytisch härtbares Tränkharz für den Isolationsaufbau einer elektrischen Maschine, umfassend mindestens ein Reaktionsharz vermischt mit mindestens einem reaktiven Verdünner und einem Härtungskatalysator insbesondere für eine kationische, anionische oder koordinative Polymerisation des Tränkharzes. Die Erfindung betrifft weiterhin eine Leiteranordnung sowie eine elektrische Spule und eine elektrische Maschine mit einer solchen Leiteranordnung.

Elektrische Maschinen, insbesondere rotierende elektrische Maschinen, beinhalten eine elektrische Wicklung innerhalb eines Blechpakets. Diese besteht aus elektrischen Leitern (die ggf. bereits mit einer Primärisolation versehen sind) und festen Isolationswerkstoffen als Hauptisolation. Ohne weitere Maßnahmen gibt es zwischen dem Blechpaket, den Leitern und der Hauptisolation keine innige Verbindung, so dass Spalten und Hohlräume entstehen. Bei Betrieb unter atmosphärischen Bedingungen, wären diese Bereiche mit Luft gefüllt. Insbesondere bei Anwendungen im Hochspannungsbereich ist dies nicht zulässig, da elektrische Teilentladungen die Isolation in kürzester Zeit zerstören würden. Dies führt zum Ausfall der elektrischen Maschine.

Um eine innige Verbindung und somit das Verdrängen von Luft zu bewirken, wird die Wicklung mittels eines härtbaren Tränkharzes oder Tränklackes imprägniert. Die festen Isolationswerkstoffe können dabei porös ausgeführt sein, um die Tränkharzaufnahme zu erhöhen. Beispiele hierfür sind Glimmerbänder, Isolationspapiere oder Vliesstoffe.

Für die Imprägnierung von Hochspannungsmaschinen sind Mischungen aus Epoxyd-Harzen und flüssigen, cycloaliphathischen Säureanhydriden Stand der Technik, siehe z.B. US 4113791 (A). Die Säureanhydride dienen hierbei als Härter für eine Polyaddition mit einem Epoxyd-Harz und setzen gleichzeitig die Viskosität herab, was einer zügigen und vollständigen Imprägnierung zu Gute kommt.

Säureanhydride sind aber in der Regel sensibilisierend wirkende Verbindungen, speziell bei Aufnahme über die Atemwege. Aus diesem Grund sind beim Umgang mit Säureanhydriden entsprechende Sicherheitsmaßnahmen zwingend notwendig.

Der Erfindung liegt die Aufgabe zugrunde, ein Tränkharz mit verbesserten Eigenschaften für eine Leiteranordnung einer elektrischen Maschine zu Verfügung zu stellen.

Die Aufgabe wird erfindungsgemäß gelöst durch ein Tränkharz, insbesondere ein katalytisch härtbares Tränkharz für die Leiter einer elektrischen Maschine, umfassend mindestens ein Reaktionsharz vermischt mit mindestens einem reaktiven Verdünner und einem Härtungskatalysator insbesondere für eine kationische, anionische oder koordinative Polymerisation des Tränkharzes, wobei der reaktive Verdünner ein cyclisches, organisches Carbonat enthält.

Die Aufgabe wird weiterhin erfindungsgemäß gelöst durch eine Leiteranordnung aus einer Anzahl von Leitern, wobei um die Anzahl von Leitern eine Hauptisolation vorgesehen ist, die mittels eines derartigen Tränkharzes imprägniert ist. Die Hauptisolation ist hierbei insbesondere aus festen, porösen Isolationswerkstoffen wie z.B. Glimmerbändern, Isolationspapieren oder Vliesstoffen.

Die Aufgabe wird zudem erfindungsgemäß gelöst durch eine elektrische Spule mit einer derartigen Leiteranordnung.

Die Aufgabe wird schließlich erfindungsgemäß gelöst durch eine elektrische Maschine mit einer derartigen Leiteranordnung. Die in Bezug auf das Tränkharz nachstehend angeführten Vorteile und bevorzugten Ausgestaltungen lassen sich sinngemäß auf die Leiteranordnung, die elektrische Spule und die elektrische Maschine übertragen.

Unter Härtungskatalysator wird hierbei eine Verbindung verstanden, die eine kationische, anionische oder koordinative Polymerisation des Tränkharzes ermöglicht. Im Gegensatz zu einem Säureanhydride ist ein Härtungskatalysator durch einen viel geringeren Gewichtsanteil in der Tränkharzmischung gekennzeichnet, wobei sich dieser Unterschied im Gewichtsanteil durch die unterschiedlichen chemischen Mechanismen, welche dem Härtungskatalysator und dem Säureanhydrid zugrunde liegen, ergibt.

Unter reaktivem Verdünner wird hierbei eine Komponente verstanden, die dem Reaktionsharz zur Viskositätserniedrigung zugegeben wird und bei der Aushärtung mit dem Reaktionsharz copolymerisiert. Somit ist der reaktive Verdünner nach der Aushärtung Teil eines duroplastischen Netzwerks.

Die Erfindung basiert auf der Idee die sensibilisierenden Säureanhydriden durch eine andere, geeignete Substanz zu ersetzen, die ebenfalls eine für die Imprägnierung förderliche Viskositätssenkung des Tränkharzes erlaubt. Weiterhin eine Einstellung der Polarität und des Benetzungsverhalten des Tränkharzes ermöglicht, die Eigenschaften nach der Aushärtung aber nicht negativ beeinflusst.

Hierfür ist als reaktiver Verdünner ein zyklisches, organisches Carbonat vorgesehen oder eine Mischung aus mindestens zwei zyklischen, organischen Carbonaten. Ein Vorteil der zyklischen, organischen Carbonate ist ihre niedrige Viskosität, die das rheologische Verhalten des Tränkharzes verbessert. Aufgrund der hohen Polaritäten der zyklischen, organischen Carbonate ist zudem eine gute Löslichkeit des Härtungskatalysators gewährleistet. Darüber hinaus zeichnet sich ein zyklisches, organisches Carbonat durch einen niedrigen Dampfdruck aus, wodurch das Tränkharz eine gute Vakuumfestigkeit auch bei hohen Temperaturen aufweist. Und nicht zuletzt zeichnet sich ein solches Tränkharz durch eine geringe Feuchteempfindlichkeit aus, da es keine Anhydride enthält. Insbesondere wird hierbei der Härtungskatalysator in den zyklischen organischen Carbonaten vorgelöst, bevor er dem Reaktionsharz zugesetzt wird.

Ein solches Tränkharz ist für den Einsatz in elektrische Maschinen, insbesondere für rotierende elektrische Maschinen und Hochspannungsanwendungen vorgesehen. Das Reaktionsharz kann hierbei ein beliebiges Reaktionsharz mit Oxrianfunktionalitäten oder eine Mischung verschiedener Reaktionsharze mit Oxrianfunktionalitäten sein.

Bevorzugt ist das zyklische, organische Carbonat Propylencarbonat, Glycerincarbonat oder Butylencarbonat. Diese Substanzen sind besonders vorteilhaft im Hinblick auf eine Einstellbarkeit der Viskosität, des Dampfdrucks, der Polarität und des Benetzungsverhaltens des Tränkharzes.

Vorzugsweise liegt der Anteil des zyklischen, organischen Carbonats im Tränkharz zwischen 0,001 Gew.% und 50 Gew.%, insbesondere zwischen 0,01 Gew.% und 10 Gew.%, so dass ein vorteilhaftes rheologisches Verhalten eingestellt wird.

Gemäß einer bevorzugten Ausführungsform ist der Härtungskatalysator ein organisches Salz, insbesondere ein organisches Ammonium-, Sulphonium-, Phosphonium- oder Imidazolium-Salz. Insbesondere wird als kationisches Härtungskatalysator ein 2-Butylentetramethylene sulfonium hexafluoroantimonat oder 1-Ethyl-3-methyl imidazolium dicyanamide eingesetzt. Diese organischen Salze zeichnen sich durch eine lange Lagerstabilität sowie ein hohes Niveau an thermischer und chemischer Stabilität aus, zudem verbessern sie die mechanische Festigkeit des Tränkharzes. Bevorzugt ist dabei der Anteil an kationischem Härtungskatalysator zwischen 0,001 Gew.% und 10 Gew.%.

Gemäß einer weiteren Ausführungsform ist der Härtungskatalysator eine Metall-Komplexverbindung. Die Metall-Komplexverbindung umfasst zumindest ein metallisches Zentralatom M und zumindest einen durch das metallische Zentralatom M koordinierten Liganden wobei das eine metallische Zentralatom M und der Ligand einen metallazyklischen Ring bilden. In Abhängigkeit von ihrer Zusammensetzung kann diese sowohl als katonischer als auch als anionischer oder koordinativer Härtungskatalysator wirken. Der Anteil an Metallkomplexen beträgt dabei insbesondere zwischen 0,001 Gew.% und 10 Gew.%.

Alternativ zu einem kationischen Härtungskatalysator kann auch ein Härtungskatalysator verwendet werden, der eine anionische Polymerisation des Tränkharzes hervorruft. Ein solcher anionischer Härtungskatalysator ist bevorzugt durch tertiäre Amine oder Imidazol-Verbindungen gebildet. Beispielsweise werden hierbei 4,5-Dihydroxymethyl-2-phenylimidazol oder 2Phenyl-4-methyl-5-hydroxymethylimidazol eingesetzt. Ähnlich wie bei einem kationischen Härtungskatalysator ist der Anteil des anionischen Härtungskatalysators insbesondere zwischen 0,001 Gew.% und 10 Gew.%.

Vorteilhafterweise enthält das Tränkharz zudem mindestens einen organischen und/oder anorganischen nanoskaligen Füllstoff. Die Nanopartikel, die auch in Form einer Mischung verschiedener nanoskaliger Füllstoffe vorliegen können, verbessern insbesondere die Schlagzähigkeit, das Delaminationsverhalten, die Rissanfälligkeit und die Teilentladungsbeständigkeit des gehärteten Tränkharzes.

Weiterhin von Vorteil ist, dass das Tränkharz mindestens einen organischen und/oder anorganischen mikroskaligen Füllstoff enthält. Denkbar ist auch eine Mischung von mikroskaligen Füllstoffen. Solche Füllstoffe bewirken eine Erhöhung der mechanischen Festigkeit.

Nach einer bevorzugten Ausführungsform ist der Härtungskatalysator nicht direkt dem Tränkharz zugesetzt, sondern der Härtungskatalysator für das Tränkharz ist in den porösen Isolationswerkstoff Werkstoff der Hauptisolation enthalten. Hierbei wird die Lagerstabilität des Tränkharzes wesentlich gesteigert.

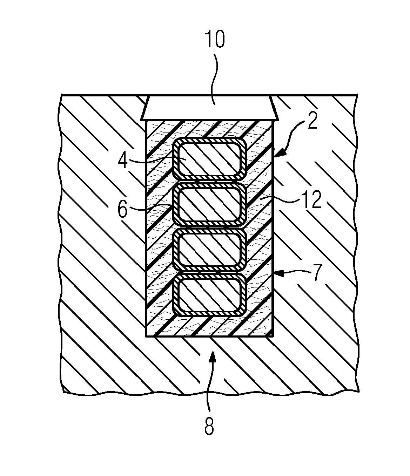

Ein Ausführungsbeispiel der Erfindung wird anhand einer Zeichnung näher erläutert. Hierin zeigt die einzige Figur eine Leiteranordnung 2 umfassend mehrere Leiter 4, die jeweils eine Primärisolation 6 aufweisen (z.B. aus Glimmerbändern, Drahtlack, Polyimid-Folie). Die Leiteranordnung 2 ist in einer Nut 7 eines Blechpakets 8 angeordnet, deren Öffnung durch einen Nutverschluss 10 verschlossen ist.

Die Nut 7 ist zudem mit einer Hauptisolation 12 ausgefüllt. Die Hauptisolation 12 ist imprägniert mit einem Tränkharz, welches mindestens ein Reaktionsharz vermischt mit mindestens einem reaktiven Verdünner und einem Härtungskatalysator enthält, wobei der reaktive Verdünner ein cyclisches, organisches Carbonat enthält. Hierbei wird durch das Tränkharz die Luft in der Nut 7 verdrängt. Die Hauptisolation 12 weist einen porösen Werkstoff auf und der Härtungskatalysator für das Tränkharz ist in den porösen Werkstoff enthalten.

Die Leiteranordnung 2 ist Teil einer hier nicht näher gezeigten elektrischen Spule. Die elektrische Spule ist wiederum in einer elektrischen Maschine eingebaut. Alternativ ist die Leiteranordnung 2 in der elektrischen Maschine eingebaut, ohne Teil einer elektrischen Spule zu sein.

## Patentansprüche

1. Tränkharz, insbesondere ein katalytisch härtbares Tränkharz für die Leiter einer elektrischen Maschine, umfassend mindestens ein Reaktionsharz vermischt mit mindestens einem reaktiven Verdünner und einem Härtungskatalysator insbesondere für eine kationische, anionische oder koordinative Polymerisation des Tränkharzes,
**dadurch gekennzeichnet, dass** der reaktive Verdünner ein cyclisches, organisches Carbonat enthält.

2. Tränkharz nach Anspruch 1,
**dadurch gekennzeichnet, dass** das cyclische, organische Carbonat Propylencarbonat, Glycerincarbonat oder Butylencarbonat ist.

3. Tränkharz nach einem der vorhergehenden Ansprüche,
**dadurch gekennzeichnet, dass** der Anteil des cyclischen, organischen Carbonats zwischen 0,01 Gew.% und 50 Gew.%, insbesondere zwischen 0,01 Gew.% und 10 Gew.% liegt.

4. Tränkharz nach einem der vorhergehenden Ansprüche,
**gekennzeichnet durch** organische Salze als kationische Härtungskatalysatoren, insbesondere organische Ammonium-, Sulphonium-, Phosphonium- oder Imidazolium-Salze.

5. Tränkharz nach einem der vorhergehenden Ansprüche,
**gekennzeichnet durch** Metall-Komplexverbindungen als Härtungskatalysator.

6. Tränkharz nach einem der vorhergehenden Ansprüche,
**gekennzeichnet durch** tertiäre Amine oder Imidazol-Verbindungen als anionische Härtungskatalysatoren.

7. Tränkharz nach einem der vorhergehenden Ansprüche,
**gekennzeichnet durch** mindestens einen organischen und/oder anorganischen nanoskaligen Füllstoff.

8. Tränkharz nach einem der vorhergehenden Ansprüche,
**gekennzeichnet durch** mindestens einen organischen und/oder anorganischen mikroskaligen Füllstoff.

9. Leiteranordnung (2) aus einer Anzahl von Leitern, wobei um die Anzahl von Leitern eine Hauptisolation (12) vorgesehen ist, die mittels eines Tränkharzes nach einem der vorhergehenden Ansprüche imprägniert ist.

10. Leiteranordnung (2) nach Anspruch 9,
wobei die Hauptisolation (12) einen porösen Werkstoff aufweist und der Härtungskatalysator für das Tränkharz in den porösen Werkstoff enthalten ist.

11. Elektrische Spule mit einer Leiteranordnung (2) nach Anspruch 9 oder 10.

12. Elektrische Maschine mit einer Leiteranordnung (2) nach Anspruch 9 oder 10.
